Europäisches Patentamt

European Patent Office

Office européen des brevets

(11) Publication number: **0 517 383 A2**

## EUROPEAN PATENT APPLICATION

(21) Application number: 92304356.6

(22) Date of filing: 14.05.92

(51) Int. Cl.5: **H04N 5/92**, H04N 7/137

(30) Priority: **31.05.91 JP 156214/91**

(43) Date of publication of application:
**09.12.92 Bulletin 92/50**

(84) Designated Contracting States:
**DE FR GB**

(71) Applicant: **International Business Machines**
**Corporation**
**Old Orchard Road**
**Armonk, N.Y. 10504(US)**

(72) Inventor: **Takahashi, Junichi**
**4-30-2-208 Kamimeguro, Meguro-ku**
**Tokyo(JP)**
Inventor: **Hashihara, Hidehaur**
**5-220-505 Ishikawa-cho, Naka-ku**
**Yokohama-shi, Kanagawa-ken(JP)**

(74) Representative: **Blakemore, Frederick Norman**
**IBM United Kingdom Limited Intellectual**
**Property Department Hursley Park**
**Winchester Hampshire SO21 2JN(GB)**

(54) **Image compression and storage.**

(57) A sequence of image frames is compressed by dividing each frame into smaller blocks. Each block of all but the initial frame is compared with the corresponding block of the immediately previous frame, with only those blocks that are different being stored. A bit map 22 is used to store information about whether or not each block is different the corresponding block in the immediately preceding frame. To reconstruct a frame, this bit map is scanned for successive frames in reverse order, starting from the bits corresponding to the object frame to be reconstructed to determine in which frame each block last changed. The logical storage page of each block of the image data is then obtained by identifying the frame when that block last changed. Any frame can therefore be quickly reconstructed by accessing only those pages actually used to store block data of the frame to be reconstructed.

FIG. 2

The present invention relates to a method of storing and compressing image data comprising a sequence of frames and of reconstructing a desired frame from the stored image data at high speed.

In order to store a large volume of moving image data in a database, it is necessary to compress the image data and thereby reduce the storage space that they occupy in a storage unit such as a disk. Besides intraframe compression of each frame (that is, each still image) in a moving image, it is possible to remove interframe redundancy by considering changes between frames in terms of time. An implementation of an interframe compression method for dividing a frame into a plurality of blocks, for comparing each block with the corresponding block in the immediately previous frame, and for storing each block in which a change exceeds a predetermined threshold level is disclosed by Hashihara in "Blocked Error Diffusion Method for Image Sequences," IBM TDB Vol. 33, No. 10A, pp. 94 - 95, March 1991. In this method, both the total number of blocks stored (in other words, the compression ratio) and the number of blocks being stored for each frame depend on the criteria for measuring changes.

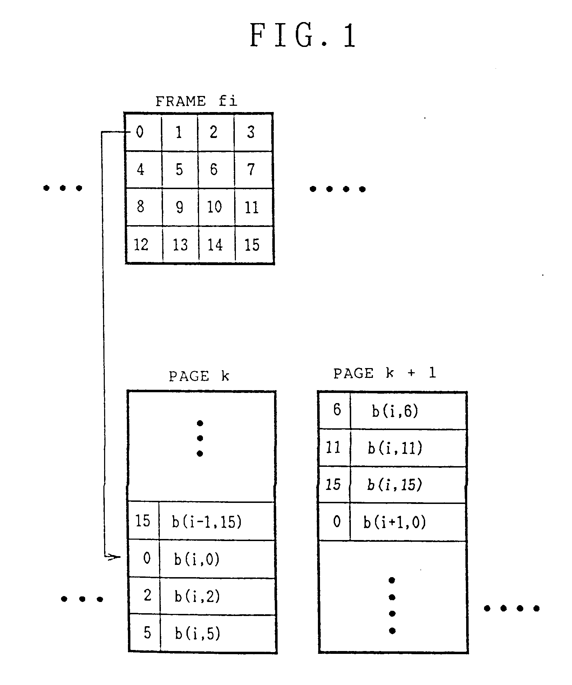

Fig. 1 shows how image data are stored when a moving image composed of a sequence of n frames f0, f1, ... , and fn-1 is compressed in accordance with an interframe method such as that described in the above-mentioned document. Each frame is divided into D blocks, and block numbers from 0 to b are assigned from the upper left block to the lower right block (in the example, D = 16). The image data b (i, j) contained in block j of frame fi are compared with those contained in block j of the previous frame, fi-1. If the block has changed, the block number j is allocated to it as a tag. The image data contained in the block are stored in a logical page of the disk in ascending order of the frame number fi and the block number j. These operations are repeated for each frame and for each block. In the example shown in Fig. 1, the stored image data correspond to the block numbers 0, 2, 5, 6, 11, and 15 of the blocks forming the frame fi. The image data stored in blocks may or may not be compressed within the blocks.

If a sequence of frames of moving image data is interframe compressed and stored as shown in Fig. 1, the moving image can be played back by accessing the disk sequentially from the first logical page. However, when a particular frame or a particular portion of moving image data is to be searched for at random, a sequential access operation is also required, and as a result the search efficiency becomes low. In other words, extra pages that include image data of extra blocks not required for reconstructing the object frame have to be accessed before image data for an object frame (a frame to be reconstructed). In particular, the search efficiency of the second half of a sequence of frames decreases markedly. When only intraframe compression is performed, the efficiency of the random access operation can be improved by creating an index for conversion from frame numbers to logical pages (for example, a B+ tree in which the first storage page for each frame is stored in a leaf node of the tree). However, when interframe compression is also performed, a block that is identicated with the corresponding block in the immediately previous frame cannot be accessed by using the above-mentioned index scheme.

Accordingly, the invention provides a method of compressing and storing image data comprising a sequence of frames, each frame consisting of a plurality of blocks, said method comprising the steps of:

comparing each block in a current frame with the corresponding block from the immediately preceding frame to determine whether the image data in the block has changed, and if so, storing the current image data from the block;

and characterised by:

storing in a table for each frame and block information indicating whether or not the image data in the block has changed from the corresponding block of the immediately preceding frame.

This method allows any particular frame to be rapidly reconstructed. The number of logical pages that are needed to be accessed to reconstruct the frame can be minimised (a logical page is a unit of the input and output operations of a storage unit). Thus in reconstructing a particular frame from moving image data that are interframe compressed and stored, this approach speeds up operations for nonsequential access to frames. Any frame from the sequence of moving image frames with interframe compression can be reconstructed in a relatively short time, not significantly affected by the frame's location in the sequence of frames. This allows individual frames from moving image data to be flexibly retrieved at high speed.

The number of blocks into which each frame is divided, the size thereof, the dividing method thereof, the contents of information stored as image data of blocks, and the criteria for determining changes in blocks are practically determined by the specifications of the interframe compression, and are not directly relevant to the present invention.

Preferably the information indicating whether or not image data in the block has changed is stored in the table as a bit map, each block of each frame being associated with a particular bit, and one predetermined bit value is stored in the table if is determined that the image data for that block and frame has changed from the corresponding block of the immediately preceding frame, and the opposite bit value if the image data has not changed. Other possible formats for the table include storing the information in the table as a set of numbers, each number being associated with a particular frame and block and identifying the frame when the image data in that particular block last changed.

Thus image data formed from a sequence of frames can be compressed and the compressed image data stored in a storage unit. For each of the blocks contained in a given frame (other than the initial frame) it can be determined whether or not the block has changed since the immediately previous frame, by comparing the block in the current frame with the corresponding block in the previous frame. If a change is found, image data from the block can be stored in a storage unit. Appropriate information is also stored in a table to indicate that the block of the frame has changed or that it has not changed.

The table can be a bit map storing a bit at a location determined both by a frame number defined to show the frame's position in the sequence of frames and by a block number defined to show the block's position in the frame. A change in a particular block of a particular frame is represented by storing one bit value at the corresponding location, and no change is represented by storing the opposite bit value at the corresponding location. In addition, a storage number representing the storage order of the image data in the storage unit can be assigned to every block that has changed.

The invention also provides a system for compressing and storing image data comprising a sequence of frames, each frame consisting of a plurality of blocks, said system comprising:

means for comparing each block in a current frame with the corresponding block from the immediately preceding frame to determine whether the image data in the block has changed;

means for storing the current image data from the block if it is determined that the image data in the block has changed from the corresponding block of the immediately preceding frame;

and characterised by:

means for storing in a table for each frame and block information indicating whether or not the image data in the block has changed from the corresponding block of the immediately preceding frame.

The invention further provides a method for reconstructing image data from stored, compressed image data, said image data comprising a sequence of frames, each frame consisting of a plurality of blocks, wherein the stored, compressesd image data consists only of those blocks of image data that differ from the image data in the corresponding block of the immediately preceding frame, an individual frame being reconstructed by:

selecting blocks from the stored blocks of image data;

assembling the selected blocks into the reconstructed image;

the method being characterised in that associated with the stored, compressed image data is a table storing information for each block and frame indicating whether or not the image data in the block has changed from the corresponding block of the immediately preceding frame, and said step of selecting comprises:

accessing the table in response to a request for a particular frame to be reconstructed;

identifying from the table, for each block in the requested frame, the stored block containing the image data for that block; and

accessing the identified stored blocks.

Preferably the information is stored in the table as a bit map, each block of each frame being associated with a particular bit, with one predetermined bit value in the table indicating that the image data for that block and frame has changed from the corresponding block of the immediately preceding frame, and the opposite bit value indicating that the image data has not changed, wherein said step of identifying comprises the step of:

selecting frames in reverse order, starting with the requested frame; and

scanning the bits for each selected frame to identify any stored blocks from the selected frame containing the same image data as the corresponding block for the requested frame, until a stored block has been identified for each block in the requested frame.

It is also preferred that the stored blocks are arranged in pages in a storage unit, and said step of identifying further includes the step of determining the page in which a stored block is located. Preferably the step of accessing the identifed stored blocks comprises the steps of:

reading into a buffer a page which is determined to contain at least one of said identified stored blocks; and

determining which blocks in the page correspond to said at least one identified stored blocks.

Thus the table can be accessed, in response to an inputted object frame number for reconstruction, to obtain for each block of the object frame the number of the frame in the sequence up to and including the object frame in which the block last changed. The range of storage locations to be accessed is thereby determined according to the frame numbers obtained, and image data in the determined range obtained from the storage means to allow selection of the image data that constitute the object frame.

The sequence of bits corresponding to successive frames in the bit map are scanned until an appropriate bit is found for every block, said scan starting from the sequence of bits corresponding to the object frame, and progressing through the frames in reverse order towards the sequence of bits corresponding to the initial frame. The storage number is calculated for each block that contains image data present in the object frame by using the block number and the obtained frame number, and the page of the storage means to be accessed is calculated from the storage number. The storage number of a block included in the page being accessed is then compared with the set of storage numbers containing blocks of image data from the object frame.

The invention also provides apparatus for reconstructing image data from stored, compressed image data, said image data comprising a sequence of frames, each frame consisting of a plurality of blocks, wherein the stored, compressesd image data consists only of those blocks of image data that differ from the image data in the corresponding block of the immediately preceding frame, the apparatus comprising:

means for selecting blocks from the stored blocks of image data;

means for assembling the selected blocks into the reconstructed image;

the apparatus being characterised in that the storage means further contains a table storing information for each block and frame indicating whether or not the image data in the block has changed from the corresponding block of the immediately preceding frame, and said means for selecting comprises:

means for accessing the table in response to a request for a particular frame to be reconstructed;

means for identifying from the table, for each block in the requested frame, the stored block containing the image data for that block; and

means for accessing from the storage means the identified stored blocks.

The reconstruction of frames is not limited to playing them back in order, but can also be used, for example, to extract statistics from the frames. Other possibilities are range reproduction: a frame sequence browsing operation for any range of frames, or frame movement: a frame browsing operation for moving at random from one frame to another in both forward and backward directions. In the former case, the initial frame of the range is reconstructed, and thereafter, logical pages are sequentially accessed, and images for blocks which are different from these in the immediately previous frame are displayed. Thus, the frames after the initial frame can be sequentially reconstructed.

An image data system can be constructed comprising:

means for storing the image data from a sequence of frames, each frame of which is composed of a plurality of blocks, a number defined in said sequence being assigned to each frame and a number also being assigned to each of said plurality of blocks, and for every frame other than the initial frame storing any block of image data that is different from the corresponding block of the immediately previous frame;

a table for finding the number of the frame in the sequence up to and including the current frame, in which said block last changed, for a given desired frame number and block number;

means for accessing said table in response to an object frame number being inputted, and for obtaining the number of the frame, for each block of said object frame, in which said block last changed, in the sequence up to and including said object frame;

means for determining the range to be accessed in said storage means according to the frame numbers obtained; and

means for accessing said storage means in said determined range, obtaining image data, and selecting image data that constitute said object frame.

An embodiment of the invention will now be described by way of example with reference to the following drawings:

Fig. 1 is a schematic diagram showing the conventional format for storing block data.

Fig. 2 is a schematic diagram showing the structure of a system in accordance with the present invention.

Fig. 3 is a block diagram showing the compression unit and the indexer of Figure 2.

Fig. 4 is a schematic diagram showing a format of the frame sequence descriptor.

Fig. 5 is a schematic diagram showing the format for storing image data.

Fig. 6 is a flow chart showing the process of the access filter.

Fig. 7 is a continuation of the flow chart of Figure 6 showing the process of the access filter.

Fig. 8 is a schematic diagram showing the display coordinates of a screen.

Fig. 9 is a graph showing the results of an experimental investigation into frame reconstruction using different methods.

Fig. 10 is a schematic diagram showing an alternative format of the frame sequence descriptor.

Fig. 11 is a flow chart showing the process of the access filter where the frame sequence descriptor shown in Fig. 10 is used.

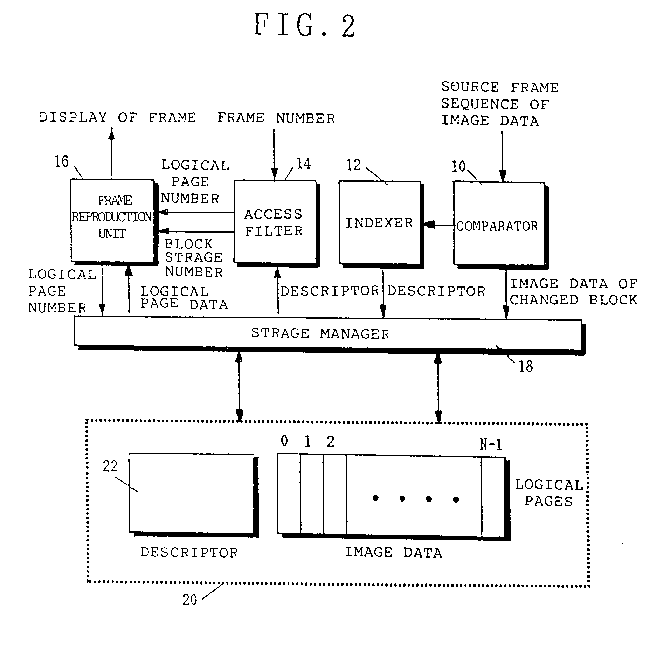

Fig. 2 is a system block diagram showing an indexer 12, an access filter 14, and a frame reproduction unit 16. The indexer 12 creates a frame sequence descriptor 22, which describes the result of comparing each block of each frame with the corresponding block of the immediately previous frame on the basis of the result of the interframe compression of a moving image by a comparator or compression unit 10. The indexer 12 stores the frame sequence descriptor 22 on a disk 20. The access filter 14 reads the frame sequence descriptor 22 created by the indexer 12 from the disk 20 to a memory. Thereafter, for the blocks required to reconstruct the object frame, the access filter 14 creates a list of block storage numbers which indicate the storage order of the blocks in logical pages of the disk 20. The access filter 14 uses the list to calculate the logical pages of the disk 20 which store the blocks. The frame reproduction unit 16 reads logical pages calculated by the access filter 14 to the memory (not shown in the figure), one page at a time. Thereafter, the frame reproduction unit 16 selects image data necessary for constituting the object frame from the pages and sends the resulting data to a display unit (not shown in the figure). A storage manager 18 converts logical pages into real physical addresses. Since the conversion into physical addresses can be performed by a known method, its description is omitted. The compression unit 10, the indexer 12, the format of the frame sequence descriptor 22 created by the indexer 12, the storage format of image data, the process of the access filter 14, and the display process of the frame reproduction unit 16 will now be described in detail.

A) Compression unit and indexer

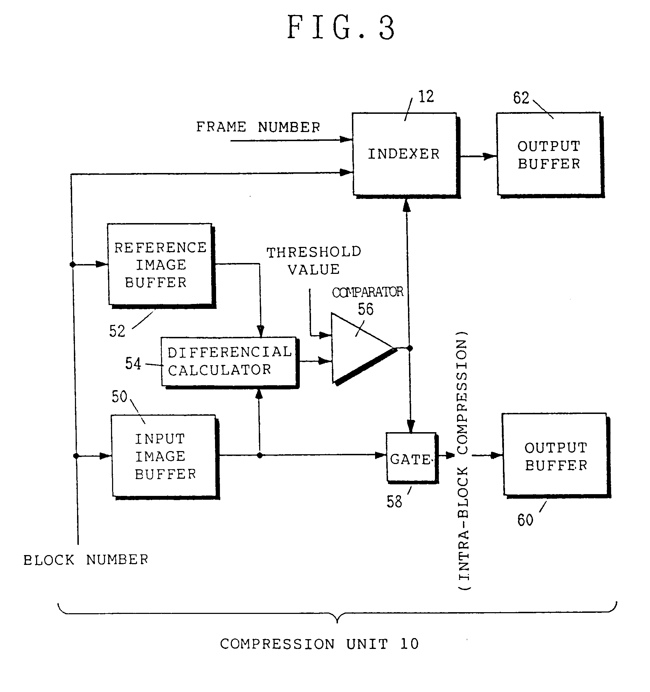

Fig. 3 shows the compression unit 10 and the indexer 12 from in Fig. 2. The compression unit 10 has the same structure as that used in the above-mentioned conventional method. An input image buffer 50 and a reference image buffer 52 store image data for each frame. The reference image buffer 52 stores image data of the frame immediately preceding the frame stored in the input image buffer 50. Image data with the same block number are read from the buffers 50 and 52. A differential calculator 54 calculates the difference between the two blocks of image data. The output of the differential calculator 54 is sent to a comparator 54. The comparator 56 compares the output of the differential calculator 54 with a predetermined threshold value. The output of the comparator 56 is a binary value determined by whether or not the difference exceeds the threshold value. If the difference exceeds the threshold value, a gate 58 is opened and the image data of the input image buffer is sent to an output buffer 60. It is possible to place an intra-block compression unit between the gate 58 and the output buffer 60. After the contents of the buffers 50 and 52 have been compared for all the blocks, the content of one buffer 50 is copied to the other 52. Thereafter, image data of the next frame are stored in the first buffer 50.

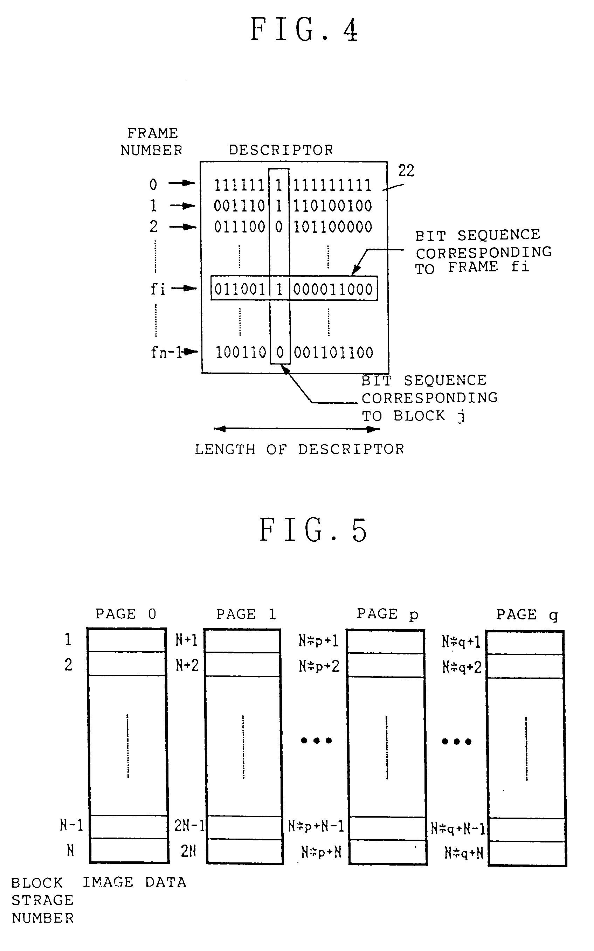

The indexer 12 is a unit for creating a bit map as shown in Fig. 4. The indexer 12 writes the output of the comparator 56 to a bit map in the buffer 62 whose bit location is determined both by the number of the frame stored in the buffer 50 and by the currently designated block number. Since bit map creation techniques are widely known, details of the structure of the indexer 12 are omitted.

B) Format of frame sequence descriptor

The frame sequence descriptor created by the indexer 12 is a bit map in which one bit is assigned to each block included in the frame fi (where i is any non-negative integer less than n) in a sequence of n frames f0, f1, ..., fn-1. The bit map describes whether or not a particular block is different from the corresponding block of the immediately previous frame fi-1. In this example, a change in a block is represented by "1", while no change in a block is represented by "0". In the frame sequence descriptor 22, a sequence of bits corresponding to one frame has a bit length equal to the number of all the blocks D included in one frame. This length is termed the length of the frame sequence descriptor. The size of the frame sequence descriptor is given by multiplying the length of the descriptor by the number of frames in a moving image to be compressed. Hereinafter, the bit in the frame sequence descriptor corresponding to block b of frame f is represented by FSD (f, b).

C) Storage format of image data

As shown in Fig. 5, the image data of a block that has changed is stored on the disk starting from logical page 0. If the quantity of image data in one block is S bytes and the page size is P bytes, the maximum number of blocks N in one page can be expressed by the following equation:

$N = [P/S]$ (where $[X]$ is the maximum integer that does not exceed x).

In this embodiment, a number that indicates a disk storage order is assigned to each block of image data stored on the disk. This number is termed a block storage number. If the total number of pages necessary for storing all changed blocks is q, the block storage number n satisfies the relation $1 <= n <= N * q + N$. Page p contains the stored image data of N blocks, which are assigned the storage numbers N * p + 1 to N * p + N.

## D) Access filter

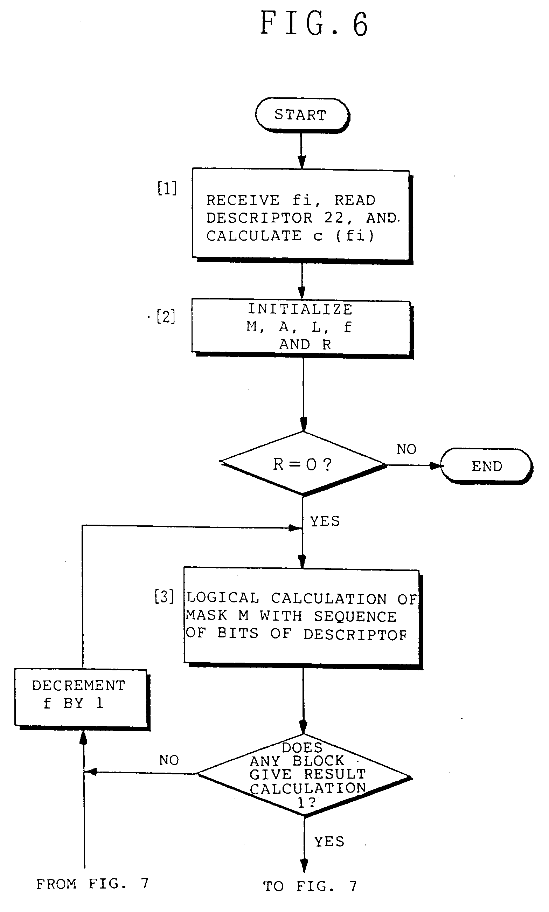

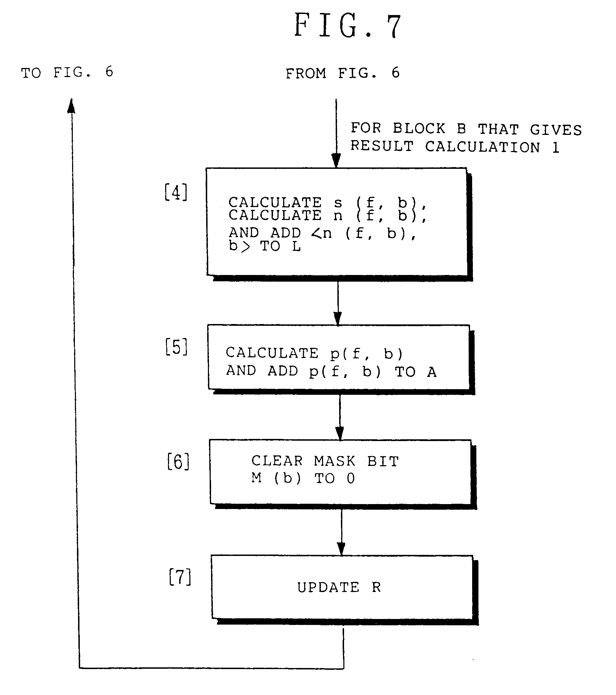

The access filter receives the frame number of an object frame to be reconstructed. Next, as shown in Figs. 6 and 7, it obtains a block storage number n for the block b that constitutes an object frame (where b is a block number defined in one frame as in the example of Fig. 1, namely, $0 <= b < D$), creating a list consisting of pairs $\langle n, b \rangle$ that is a combination of a block storage number n and a block number b, and calculates the logical page of the disk on which the image data of the above-mentioned blocks are stored (2), in accordance with the following steps 1 to 7.

(1) A frame number fi of an object frame to be reconstructed is inputted while the descriptor 22 is read from the disk 20. At that time, for each frame fi (where $1 <= i <= n - 1$), the sum c (fi) of bit values is calculated for the sequence of bits of the descriptor in the range from the initial frame to the frame immediately before the object frame. The sum c represents the total number of blocks stored on the disk 20 in the range from the initial frame f0 to the frame fi-1 immediately before the object frame. In the example in Fig. 4, c (f2) is 24. Note that c (f0) is set to 0 for the initial frame (f0).

(2) A mask M with a bit length equal to the number of blocks D included in one frame is prepared in a memory. As initial values of the mask, all the bits are set to "1". As will be described later, whenever a logical storage page of image data of one block included in the object frame fi is calculated in the following process step, the corresponding bit location in the mask M is cleared to "0".

In step 2, a set A of logical pages on the disk used for storing the image data of blocks constituting the object frame is initialized to an empty set. In addition, a list L of pairs $\langle n, b \rangle$ consisting of the block storage number n obtained for each block included in the object frame and the block number b is initialized to an empty list. Finally, the current frame number f is initialized to fi. The number of blocks R for which the storage pages have not been found is initialized to the number of all blocks D.

(3) When the number of blocks R for which the pages have not been found is "0", the process is complete. Otherwise, for blocks in which the bit is "1", and for which accordingly the storage pages have not been found, changes in the current frame are searched for by using the sequence of bits of the descriptor corresponding to the current frame. For this purpose, as expressed by the equation below, the current mask is ANDed bit by bit with the sequence of bits of the current frame for every block b (where $0 <= b < D$). In other words, by using the b-th bit M (b) of the mask M and the bit FSD (f, b) of the descriptor corresponding to block b of the current frame f, the following calculation is performed:

M (b) AND FSD (f, b)

(4) When no block gives the calculation result 1, the current frame number is decremented by 1 and the process returns to step 3. The block b that gives the calculation result 1 has a change in the current frame. With respect to block b, the storage order s (f, b) of the image data within the current frame is calculated by using the following equation:

$$s (f, b) = \sum_{k=0}^{b} FSD (f, k)$$

The value of c (f) obtained in step 1 indicates the total number of blocks stored on the disk in the range up to the frame immediately before the current frame f. Therefore, the block storage number n (f, b) of the block b can be expressed by the following equation:

n (f, b) = c (f) + s (f, b)

A pair $\langle n (f, b), b \rangle$, which is a combination of the block storage number n (f, b) and the block number b in the frame, is added to the list L.

(5) For a block b in which a change has been found in the current frame f in step 3, the page number p (f, b) on the disk where the block data are stored is calculated by using the following equation with the block storage number n (f, b), and the resulting page number p (f, b) is inserted as an element of the logical page set A:

p (f, b) = [n (f, b) / N],

where duplicated page numbers are not repeatedly inserted into set A.

(6) The mask bit corresponding to the block of the current frame for which the storage page has been calculated is cleared to "0". In other words, the current mask bit M (b) and the one's complement of the descriptor bit FSD (f, b) are ANDed so as to obtain a new mask bit:

M (b) = M (b) AND (NOT FSD (f, b)).

(7) Following the above-mentioned steps for the current frame, the number of blocks in which the mask bit becomes "1" is subtracted from the variable R. The current frame number f is decremented by "1" and the process returns to step 3.

When one frame has been reconstructed in such a sequential search of frames, another frame can be reconstructed without newly accessing blocks that have not been changed between these frames in order to obtain the image data contained in the object frame. Instead, only blocks whose descriptor bit is 1 for frames in the range between the frame fi that has been reconstructed and the object frame fj should be accessed. Thus, with a modified step 2' of the above-mentioned step 2, the object frame can be reconstructed by accessing fewer pages on the basis of the frame that has been reconstructed.

(2') First, the initial value of the current frame f is set to the object frame fj. If the object frame fj is followed by the frame fi that has been reconstructed (in other words, if fi > fj), the mask M is initialized by ORing the bit sequences of the descriptor in the range between the object frame fj and the current frame fi. In other words, the initial value for M(b) is given by the following equation:

$$M~(b)~=~FSD~(fj,~~~b)~OR$$
$$FSD~(fj+1,~b)~OR$$
$$\cdots\cdots~~~~~~~~~~OR$$
$$FSD~(fi,~~~b)$$

In contrast, if the object frame fj is preceded by the frame fi that has been reconstructed (in other words, if fi < fj), the mask M is initialized by ORing the bit sequences of the descriptor in the range between the frame immediately following the current frame fi and the object frame fj. In other words, the initial value for M(b) is given by the following equation:

$$M~(b)~=~FSD~(Fi+1,~b)~OR$$
$$\cdots~~~~~~~~~~~~OR$$
$$FSD~(fj,~~~b)$$

In any case, variable R, the number of blocks for which the storage pages have not been found, is set to the number of bit counts included in the mask M where bit = 1.

E) Display process of the frame reproduction unit

The logical pages in the set A calculated by the access filter are sorted in ascending order of their page numbers. Thereafter, each page p is processed in the following manner:

(11) The data in logical page p are read into a buffer in the memory.

(12) The image data that are read into the buffer consist of N blocks, whose storage numbers are in the range N * p + 1 to N * p + N. The storage numbers of the blocks that contain image data necessary to reconstruct a frame are included in the list L along with the block numbers. Thus, when an i-th block (1 < = i < = N) in the buffer and a pair ⟨j, b⟩ in the list L satisfies the equation N * p + i = j, the data in the buffer corresponding to the storage number N * p + i are shown on the display unit. At that time, the screen coordinates (x, y), which are the starting point from which the image data of the block i are displayed, are calculated by using the following equations with the conditions that the initial coordinates of the whole frame are (x0, y0), the numbers of blocks in the x and y directions are Dx and Dy (Dx * Dy = D), respectively, the numbers of pixels in the x and y directions for one block are Kx and Ky, respectively, and the block number is b.

x = x0 + (b%Dx) * Kx
y = y0 + (b/Dy) * Ky

(where % denotes an operator for obtaining a remainder).

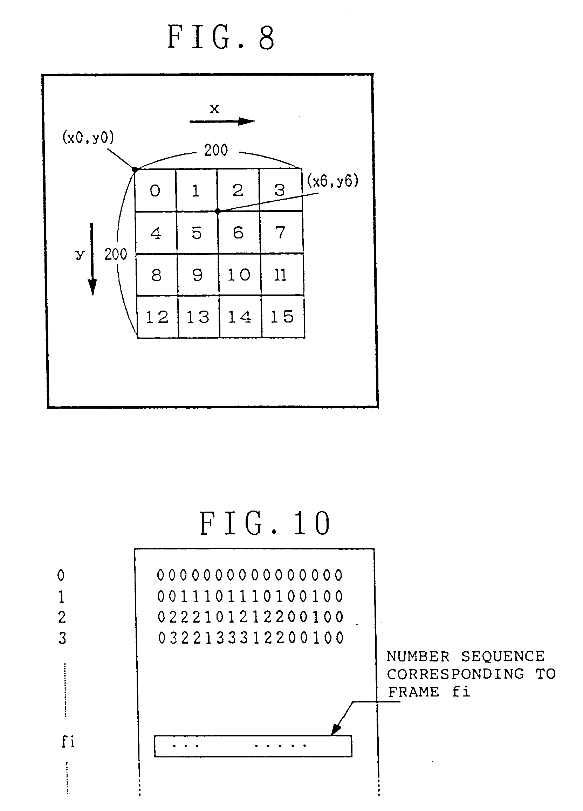

In the example shown in Fig. 8, the initial coordinates (x6, y6) for the block 6 are obtained by the following equations:

x6 = x0 + 100
y6 = y0 + 50

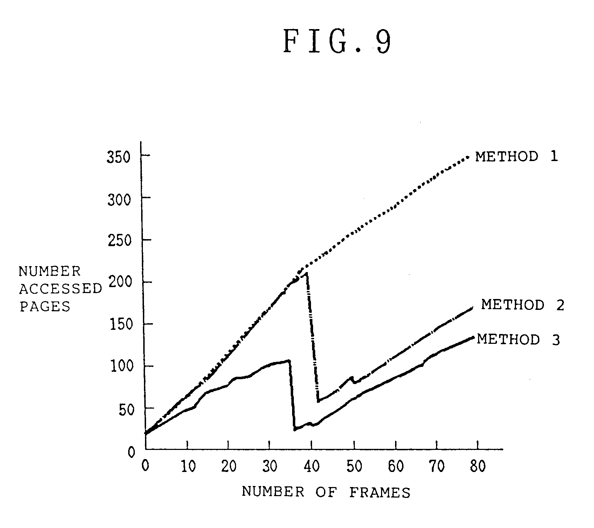

An experiment was performed to investigate the performance of different frame storage/reconstruction methods. Fig. 9 shows the relation found between the frame number and the number of logical pages that are accessed so as to reconstruct the frames for a sample moving image. The sample moving image consists of 80 frames, and the frame size is 48 kB (256 x 192 pixels). The logical page size is 4 kB and the block size is 64 Bytes (8 x 8 pixels). In this case, the compression rate is 35.8%. Although the frame sequence descriptor is stored in a disk space, this space is much smaller than that required for image data. In the case of the above-mentioned sample image, the size of the descriptor in relation to that of the compressed image data is approximately 0.5%.

In reconstruction method 1, frames are sequentially accessed from the initial frame to the object frame. In method 2, frames are accessed from a middle frame to an object frame, the middle frame being followed by the object frame, and all blocks of the middle frame are different from those of the object frame. Method 3 corresponds to that of the present invention. When method 3 is compared with the method 1 and method 2 in terms of the increase in the number of pages to be accessed as the frame number increases, it is found that the rate of increase in method 3 is lower than in methods 1 and 2. In particular, because of the scene change at the 36-th frame of the sample moving image, it is clear that, in method 3, the effect of the access filter is significant in the second half of the sequence of frames, and that in the frames that follow the scene change, the number of pages accessed for the reconstruction decreases markedly. In other words, method 3 makes it possible to reconstruct the frames following the frame with the scene change at a high speed by using the scene change frame and images of blocks changed after the scene change.

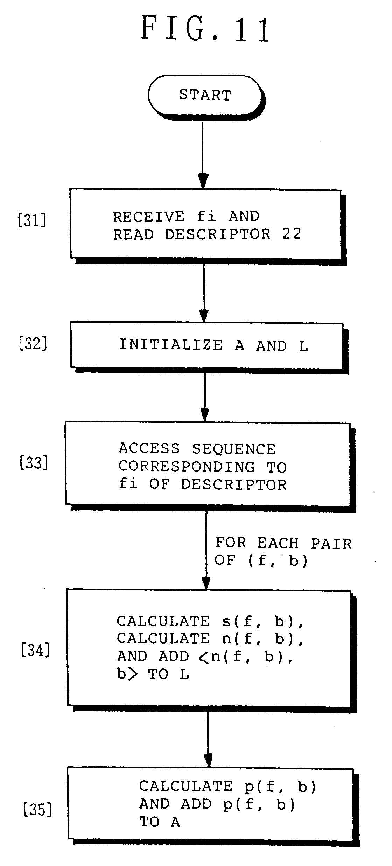

The purpose of the FSD table is to give the frame number of the block last changed, in a sequence up to and including the current frame, for any block of any frame. However, the form of the table is not limited to the bit map shown in Fig. 4. For example, it is possible instead to use the format shown in Fig. 10 for the frame sequence descriptor. In the format shown in Fig. 10, in the number sequence corresponding to each frame number, a frame number is given for each block in the frame to show where that block last changed in the sequence of frames from the initial frame up to and including the current frame. One frame number is described by a binary code with a plurality of bits. To create the frame sequence descriptor shown in Fig. 10, the indexer 12 shown in Fig. 3 should operate as follows:

(21) A number 0 is written to the output buffer 62 at each location corresponding to each block of frame 0. In addition, the content of the frame sequence descriptor for frame 0 is temporarily stored in a buffer (termed a previous frame buffer) other than the output buffer 62.

(22) The following operation is performed for block b ($0 <= b < D$) of frame fi ($1 <= $ fi).

When the output of the comparator 56 indicates that block b of frame fi is different from block b of frame fi-1, the number fi is written to the output buffer at a location determined by the numbers fi and b. In contrast, when the output of the comparator 56 indicates that a change has not occurred, the content of the location corresponding to block b of the previous frame buffer is written to the output buffer at a location determined by the numbers fi and b.

Using the descriptor shown in Fig. 10, the access filter calculates the logical page to be accessed in accordance with the steps shown in Fig. 11. Unlike in the steps shown in Figs. 6 and 7, the mask M and the variable R are not used.

(31) The same process as in step 1 is performed. However, the descriptor shown in Fig. 10 does not describe whether or not each block is changed. Thus, two number sequences corresponding to two successive frames are stored in different buffers. The contents of the two buffers are compared and information equivalent to bit 1 in Fig. 4 is then obtained. c (fi) is then calculated in accordance with the resultant information.

(32) This step is the same as step 2 except that only the set A and the list L are initialized.

(33) A sequence of numbers corresponding to the object frame number fi is accessed. Thus, for each block h, the frame number f is obtained for the frame in which the block last changed, including frame fi.

(34) Two sequences of numbers corresponding to frame f and the immediately previous frame are stored in different buffers. The number of blocks that differ in the two buffers is counted in the range up to and including block b. In this way, the storage order s (f, b) of block b of frame f is calculated. The calculation of n (f, b) and addition of the pair ⟨n (f, b), b⟩ to the list L are as in step 4.

(35) This step is the same as step 5.

So far, it has been assumed that the number of blocks stored in one logical page is constant. However, when the compression unit 10 performs intra-block compression, the quantity of image data per block is not constant. Thus, the number of blocks per logical page may vary. Consequently, a page number cannot be obtained in accordance with the equation described in step 5. In this case, it is necessary to create a table describing a block storage number for the first block in each logical page when the compression unit 10 compresses image data. With such a table, a page number to be accessed can be obtained by comparing n (f, b) with the block storage number for the first block in each page in step 5.

## Claims

1.  A method of compressing and storing image data comprising a sequence of frames, each frame consisting of a plurality of blocks, said method comprising the steps of:

    comparing each block in a current frame with the corresponding block from the immediately preceding frame to determine whether the image data in the block has changed, and if so, storing the current image data from the block;

and characterised by:

storing in a table (22) for each frame and block information indicating whether or not the image data in the block has changed from the corresponding block of the immediately preceding frame.

2. A method as claimed in claim 1, wherein the information is stored in the table as a bit map, each block of each frame being associated with a particular bit, and storing one predetermined bit value in the table if is determined that the image data for that block and frame has changed from the corresponding block of the immediately preceding frame, and the opposite bit value if the image data has not changed.

3. A method as claimed in claim 1, wherein the information is stored in the table as a set of numbers, each number being associated with a particular frame and block and identifying the frame when the image data in that particular block last changed.

4. A system for compressing and storing image data comprising a sequence of frames, each frame consisting of a plurality of blocks, said system comprising:

means (10) for comparing each block in a current frame with the corresponding block from the immediately preceding frame to determine whether the image data in the block has changed;

means (18) for storing the current image data from the block if it is determined that the image data in the block has changed from the corresponding block of the immediately preceding frame;

and characterised by:

means (12) for storing in a table (22) for each frame and block information indicating whether or not the image data in the block has changed from the corresponding block of the immediately preceding frame.

5. A method for reconstructing image data from stored, compressed image data, said image data comprising a sequence of frames, each frame consisting of a plurality of blocks, wherein the stored, compressesd image data consists only of those blocks of image data that differ from the image data in the corresponding block of the immediately preceding frame, an individual frame being reconstructed by:

selecting blocks from the stored blocks of image data;

assembling the selected blocks into the reconstructed image;

the method being characterised in that associated with the stored, compressed image data is a table (22) storing information for each block and frame indicating whether or not the image data in the block has changed from the corresponding block of the immediately preceding frame, and said step of selecting comprises:

accessing the table in response to a request for a particular frame to be reconstructed;

identifying from the table, for each block in the requested frame, the stored block containing the image data for that block; and

accessing the identified stored blocks.

6. A method as claimed in claim 5, wherein the information is stored in the table as a bit map, each block of each frame being associated with a particular bit, with one predetermined bit value in the table indicating that the image data for that block and frame has changed from the corresponding block of the immediately preceding frame, and the opposite bit value indicating that the image data has not changed, wherein said step of identifying comprises the step of:

selecting frames in reverse order, starting with the requested frame; and

scanning the bits for each selected frame to identify any stored blocks from the selected frame containing the same image data as the corresponding block for the requested frame, until a stored block has been identified for each block in the requested frame.

7. A method as claimed in claim 5 or 6, wherein the stored blocks are arranged in pages in a storage unit (20), and said step of identifying further includes the step of determining the page in which a stored block is located.

8. A method as claimed in claim 7, wherein the step of accessing the identifed stored blocks comprises the steps of:

reading into a buffer a page which is determined to contain at least one of said identified stored blocks; and

determining which blocks in the page correspond to said at least one identified stored blocks.

9. Apparatus for reconstructing image data from stored, compressed image data, said image data comprising a sequence of frames, each frame consisting of a plurality of blocks, wherein the stored, compressesd image data consists only of those blocks of image data that differ from the image data in the corresponding block of the immediately preceding frame, the apparatus comprising:

means (14) for selecting blocks from the stored blocks of image data;

means (16) for assembling the selected blocks into the reconstructed image;

the apparatus being characterised in that the storage means further contains a table (20) storing information for each block and frame indicating whether or not the image data in the block has changed from the corresponding block of the immediately preceding frame, and said means for selecting comprises:

means for accessing the table in response to a request for a particular frame to be reconstructed;

means for identifying from the table, for each block in the requested frame, the stored block containing the image data for that block; and

means for accessing from the storage means the identified stored blocks.

# FIG. 1

FRAME fi

| 0 | 1 | 2 | 3 |
|---|---|---|---|
| 4 | 5 | 6 | 7 |
| 8 | 9 | 10 | 11 |
| 12 | 13 | 14 | 15 |

• • •                              • • • •

PAGE k

|    |           |
|----|-----------|
|    | ⋮         |
| 15 | b(i-1,15) |
| 0  | b(i,0)    |
| 2  | b(i,2)    |
| 5  | b(i,5)    |

• • •

PAGE k + 1

|    |          |
|----|----------|
| 6  | b(i,6)   |
| 11 | b(i,11)  |
| 15 | b(i,15)  |
| 0  | b(i+1,0) |
|    | ⋮        |

• • • •

11

# FIG.2

# FIG. 3

FRAME NUMBER →

INDEXER 12

OUTPUT BUFFER 62

REFERENCE IMAGE BUFFER 52

THRESHOLD VALUE

COMPARATOR 56

DIFFERENCIAL CALCULATOR 54

INPUT IMAGE BUFFER 50

GATE 58

(INTRA-BLOCK COMPRESSION)

OUTPUT BUFFER 60

BLOCK NUMBER

COMPRESSION UNIT 10

# FIG. 4

FRAME
NUMBER    DESCRIPTOR

```
0  →   111111 | 1 | 111111111                    22
1  →   001110 | 1 | 110100100
2  →   011100 | 0 | 101100000
       ⋮        ⋮    ⋮                   BIT SEQUENCE
                                        CORRESPONDING
                                        TO FRAME fi
fi →  [011001 | 1 | 000011000]
       ⋮        ⋮    ⋮
fn-1→  100110 | 0 | 001101100
                                        BIT SEQUENCE
                                        CORRESPONDING
                                        TO BLOCK j
```

LENGTH OF DESCRIPTOR

# FIG. 5

```
        PAGE 0        PAGE 1            PAGE p            PAGE q
   1  │          │  N+1│         │  N÷p+1│        │  N÷q+1│        │
   2  │          │  N+2│         │  N÷p+2│        │  N÷q+2│        │
      │          │     │         │       │        │       │        │
      │    ⋮     │     │    ⋮    │ ● ● ● │   ⋮    │ ● ● ● │   ⋮    │
      │          │     │         │       │        │       │        │
 N-1  │          │ 2N-1│         │N÷p+N-1│        │N÷q+N-1│        │
   N  │          │  2N │         │ N÷p+N │        │ N÷q+N │        │
```

BLOCK   IMAGE DATA
STRAGE
NUMBER

14

# FIG. 6

START

[1] RECEIVE fi, READ DESCRIPTOR 22, AND. CALCULATE c (fi)

.[2] INITIALIZE M, A, L, f AND R

R = 0 ?　　NO　　END

YES

[3] LOGICAL CALCULATION OF MASK M WITH SEQUENCE OF BITS OF DESCRIPTOR

DECREMENT f BY 1

DOES ANY BLOCK GIVE RESULT CALCULATION 1?　　NO

YES

FROM FIG. 7　　TO FIG. 7

# FIG. 7

TO FIG. 6

FROM FIG. 6

FOR BLOCK B THAT GIVES
RESULT CALCULATION 1

[4]
```
CALCULATE s (f, b);
CALCULATE n (f, b);
AND ADD <n (f, b),
b> TO L
```

[5]
```
CALCULATE p(f, b)
AND ADD p(f, b) TO A
```

[6]
```
CLEAR MASK BIT
M (b) TO 0
```

[7]
```
UPDATE R
```

# FIG. 8

x

(x0,y0)
200

| 0 | 1 | 2 | 3 |
| 4 | 5 | 6 | 7 |
| 8 | 9 | 10 | 11 |
| 12 | 13 | 14 | 15 |

(x6,y6)

y | 200

# FIG. 10

```
0    0 0 0 0 0 0 0 0 0 0 0 0 0 0 0 0
1    0 0 1 1 1 0 1 1 1 0 1 0 0 1 0 0
2    0 2 2 2 1 0 1 2 1 2 2 0 0 1 0 0
3    0 3 2 2 1 3 3 3 1 2 2 0 0 1 0 0
⋮
fi   · · ·        · · · · ·
⋮
```

NUMBER SEQUENCE
CORRESPONDING TO
FRAME fi

17

# FIG. 9

# F I G . 1 1

START

[31] RECEIVE fi AND
READ DESCRIPTOR 22

[32] INITIALIZE A AND L

[33] ACCESS SEQUENCE
CORRESPONDING TO
fi OF DESCRIPTOR

FOR EACH PAIR
OF (f, b)

[34] CALCULATE $s(f, b)$,
CALCULATE $n(f, b)$,
AND ADD $\langle n(f, b), b \rangle$ TO L

[35] CALCULATE $p(f, b)$
AND ADD $p(f, b)$
TO A